(19) Europäisches Patentamt
European Patent Office
Office européen des brevets

(11) **EP 4 497 331 A1**

(12) **EUROPEAN PATENT APPLICATION**
published in accordance with Art. 153(4) EPC

(43) Date of publication:
**29.01.2025  Bulletin 2025/05**

(21) Application number: **24785144.7**

(22) Date of filing: **01.04.2024**

(51) International Patent Classification (IPC):
*A23L 23/00* (2016.01)    *A23L 27/30* (2016.01)
*A23L 13/70* (2023.01)    *A23L 13/77* (2023.01)
*A23L 13/75* (2023.01)    *A23P 20/18* (2016.01)
*A23P 30/00* (2016.01)

(52) Cooperative Patent Classification (CPC):
**A23L 13/06; A23L 13/03; A23L 13/57; A23L 13/70;
A23L 13/75; A23L 13/77; A23L 23/00; A23L 27/30;
A23P 20/10; A23P 20/12; A23P 20/15; A23P 20/18;
A23P 30/00**

(86) International application number:
**PCT/KR2024/004195**

(87) International publication number:
**WO 2024/210438 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **03.04.2023  KR 20230043423
29.03.2024  KR 20240043500**

(71) Applicant: **CJ CheilJedang Corporation**
**Seoul 04560 (KR)**

(72) Inventors:
• **KIM, Ji Min**
  **Seoul 04560 (KR)**
• **HAN, Jae Hwi**
  **Seoul 04560 (KR)**

• **KIM, Sung Hee**
  **Seoul 04560 (KR)**
• **BAK, Seung Wook**
  **Seoul 04560 (KR)**
• **RYU, Dong Kul**
  **Seoul 04560 (KR)**
• **PARK, Jong Se**
  **Seoul 04560 (KR)**

(74) Representative: **Meissner Bolte Partnerschaft
mbB**
**Patentanwälte Rechtsanwälte**
**Postfach 86 06 24**
**81633 München (DE)**

(54) **FOOD SAUCE COMPOSITION FOR IMPARTING CRISPINESS AND EATING CONVENIENCE,
AND FOOD PREPARATION METHOD USING SAME**

(57)    The present disclosure relates to a sauce composition for food which imparts crispness and eating convenience, and a method of manufacturing food using the same. Since the sauce composition of the present disclosure has a high sugar content and a high viscosity, when fried food is coated with the sauce composition, an amount of sauce or moisture included in the sauce adsorbed or transferred into fried food or batter is minimized, and most of the sauce is placed on the outermost surface of the batter. Thus, dampness of the fried food is prevented, and the crispy texture and flavor of the fried food may be implemented. In addition, since the sauce-coated fried food of the present disclosure may be obtained without a step of mixing the fried food with separate sauce, eating convenience of consumers may be improved.

**(Cont. next page)**

EP 4 497 331 A1

[FIG. 2]

Crispness intensity depending on brix (%)

— · · — Comparative Example 1-1
— · — Experimental Example 1-1
——— Experimental Example 1-2
— — — Experimental Example 1-3
— · — Experimental Example 1-4

**Description**

**TECHNICAL FIELD**

[CROSS-REFERENCE TO RELATED APPLICATIONS]

This application claims priorities from Korean Patent Application No. 10-2023-0043423, filed on April 3, 2023 and Korean Patent Application No. 10-2024-0043500, filed on March 29, 2024, the disclosures of which are incorporated by reference herein.

[TECHNICAL FIELD]

The present disclosure relates to a sauce composition for coating fried food which imparts crispy texture and eating convenience, and a method of manufacturing sauce-coated fried food using the same.

**BACKGROUND ART**

As the number of single-person households increases in line with the culture of modern people pursuing busy lifestyles, a demand for convenient meals on one's own is increasing, which leads to increased consumption of frozen food.

The frozen food refers to food rapidly frozen at sub-zero temperatures for the purpose of preserving manufactured, processed, or cooked food for a long time. The frozen food is convenient for cooking and storing, but as ice crystals are produced in a process of rapidly freezing food, food cells are destroyed so that the quality is lower than the quality of food before rapid freezing.

In addition, processed meat frozen food such as frozen chicken is manufactured by rapidly freezing after applying a sauce on fried meat in order to increase flavor, and due to the use of an excessive amount of sauce, there is a limit to implementing crispness and high flavor.

Specifically, since conventionally, a sauce is coated by an immersion method of pouring a sauce into fried meat or dipping the fried meat in a sauce and then mixing, the fried meat is overly coated with the sauce. When sauce is overly coated as such, moisture transfer into batter occurs rapidly, so that fried meat is processed in a damp state, and thus, it is difficult to obtain crispy texture when eating.

In order to secure both crispness and flavor, processed meat frozen food may be manufactured without being coated with a sauce during a manufacturing process of the processed meat frozen food, and then be mixed with a sauce when eating, but a separate process of preparing and mixing a sauce is involved, which reduces eating convenience of consumers.

[PRIOR ART DOCUMENTS]

[Patent Document]

Korean Patent Laid-Open Publication No. 10-2022-0100168

**DISCLOSURE OF THE INVENTION**

**TECHNICAL PROBLEM**

An object of the present disclosure is to provide a sauce composition for coating fried food which may improve eating convenience of consumers while improving crispy texture and flavor of fried food.

Another object of the present disclosure is to provide a method of manufacturing sauce-coated fried food, using the sauce composition for coating fried food.

Another object of the present disclosure is to provide frozen fried food coated with the sauce composition.

Still another object of the present disclosure is to provide a use of a sauce composition including sucrose for coating fried food.

**TECHNICAL SOLUTION**

An aspect of the present disclosure provides a sauce composition which comprises sucrose.

Another aspect of the present disclosure provides frozen fried food coated with the sauce composition of the aspect of the present disclosure.

Another aspect of the present disclosure provides a method of manufacturing fried food including: applying batter on a surface of a food raw material; frying the food raw material covered with the batter to obtain fried food; and coating a surface of the fried food with the sauce composition of the aspect of the present disclosure by spraying the sauce composition on the fried food.

An aspect of the present disclosure provides a sauce composition comprising sucrose.

The sauce composition of the present disclosure may have a sugar content of 60 to 90 brix.

Specifically, the sugar content may be in a range between one lower limit selected from the group consisting of 60 brix, 62 brix, 64 brix, 66 brix, 68 brix, 69 brix, 70 brix, 72 brix, 74 brix, 76 brix, and 78 brix; and one upper limit selected from the group consisting of 90 brix, 88 brix, 86 brix, 85 brix, 84 brix, 82 brix, and 80 brix; and for example, may be 60 to 90 brix, 60 to 88 brix, 60 to 86 brix, 60 to 85 brix, 60 to 84 brix, 60 to 82 brix, 60 to 80 brix, 62 to 90 brix, 62 to 88 brix, 64 to 86 brix, 64 to 85 brix, 66 to 90 brix, 66 to 88 brix, 66 to 86 brix, 66 to 85 brix, 66 to 84 brix, 66 to 82 brix, 66 to 80 brix, 69 to 80 brix, 69 to 85 brix, 70 to 90 brix, 70 to 88 brix, 70 to 86 brix, 70 to 85 brix, 70 to 84 brix, 70 to 82 brix, 70 to 80 brix, 72 to 90 brix, 72 to 88 brix, 74 to 88 brix, 74 to 86 brix, 76 to 90 brix, 76 to 88 brix, 76 to 86 brix, 76 to 85 brix, 76 to 84 brix, 76 to 82 brix, or 76 to 80 brix, but is not limited thereto.

In the case in which the sugar content of the sauce composition is within the range, when the fried food (for example, food obtained by frying) is coated with the sauce composition, a proportion of moisture in the sauce composition, which is absorbed or transferred into the surface of the fried food or the batter is lowered, thereby preventing dampness of the fried food or batter, and thus, imparting crispy texture to the fried food.

The unit of the sugar content, brix (%) refers to a concentration (content) of saccharide components included in an any sample solution, and for example, when 5 g of the saccharide component is included in 100 g of the sauce composition which is an any sample solution, it means 5 brix (5 wt%).

A method of measuring the sugar content of the sauce composition is not particularly limited as long as it is a commonly known method, and for example, the sugar content may be measured by confirming the specific gravity or the refractive index of the sauce composition. Specifically, the sugar content (brix) of the sauce composition may be confirmed by measuring the specific gravity of the sauce composition with a saccharimeter or measuring the refractive index of the sauce composition with a refractometer.

The sauce composition of the present disclosure may have a viscosity of 50 to 1,000 cP.

Specifically, the viscosity may be in a range between one lower limit selected from the group consisting of 50 cP, 55 cP, 60 cP, 70 cP, 80 cP, 85 cP, 90 cP, 95 cP, 100 cP, 110 cP, 120 cP, 130 cP, 140 cP, 150 cP, 160 cP, 170 cP, and 180 cP; and one upper limit selected from the group consisting of 1,000 cP, 970 cP, 950 cP, 900 cP, 870 cP, 850 cP, 820 cP, 800 cP, 780 cP, 760 cP, 700 cP, 650 cP, 600 cP, 560 cP, 530 cP, 500 cP, 450 cP, 420 cP, 410 cP, 400 cP, 390 cP, 380 cP, 370 cP, 360 cP, 350 cP, 340 cP, 330 cP, 320 cP, 310 cP, 300 cP, 290 cP, 280 cP, 270 cP, 260 cP, and 250 cP, and for example, may be 50 to 1,000 cP, 55 to 1,000 cP, 50 to 970 cP, 50 to 950 cP, 55 to 950 cP, 80 to 400 cP, 80 to 390 cP, 80 to 380 cP, 80 to 360 cP, 90 to 400 cP, 90 to 390 cP, 90 to 380 cP, 90 to 360 cP, 110 to 400 cP, 110 to 390 cP, 110 to 380 cP, 110 to 360 cP, 130 to 400 cP, 130 to 390 cP, 130 to 380 cP, 130 to 360 cP, 90 to 300 cP, 90 to 280 cP, 90 to 260 cP, 100 to 300 cP, 100 to 280 cP, 100 to 260 cP, 110 to 300 cP, 110 to 280 cP, 110 to 260 cP, 120 to 300 cP, 120 to 280 cP, 120 to 260 cP, 130 to 300 cP, 130 to 280 cP, or 130 to 260 cP, but is not limited thereto.

The viscosity may be measured at 40°C, 45°C, 50°C, 55°C, 60°C, 65°C, 70°C, 75°C, or 80°C. In addition, the viscosity may be measured through the steps of heating 40 g of a sample of the composition to the above temperature first and then measuring the viscosity by using a viscosity measuring device, RVA Perten4500 (Rapid Visco Analyzer, Paten4500) while stirring the sample at a speed of 450 RPM or 250 RPM.

In the case in which the viscosity of the sauce composition is within the range, when fried food is coated with the sauce composition, the sauce may be coated uniformly and thinly to implement fried food having crispy texture while minimizing overuse of the sauce composition. In particular, since the sauce composition has the viscosity within the range, when a process of spraying the sauce composition is performed, blockage in the lines transferring the sauce composition and injection nozzles may be minimized, so that spraying may be performed well.

In an embodiment, the sauce composition of the present disclosure may include saccharides. The saccharides are not particularly limited as long as it is a commonly known seasoning ingredient making a sweet taste, and specifically, may include monosaccharides, disaccharides, oligosaccharides, or combinations thereof.

Specifically, the monosaccharide may be arabinose, xylose, fructose, high fructose, tagatose, allose, glucose, or galactose, the disaccharide may be sucrose, lactose, maltose, trehalose, turanose, or cellobiose, and the oligosaccharide may be fructooligosaccharide, isomaltooligosaccharide, xyliooligosaccharide, gentiooligosaccharide, maltooligosaccharide, or galactooligosaccharide.

In an embodiment, the saccharide may include sucrose, honey, fructose, high fructose, maltose, oligosaccharide, or lactose.

In an embodiment, the sauce composition of the present disclosure may include sucrose, and a proportion of the sucrose may be 10 to 95 wt% with respect to 100 wt% of the sauce composition. Specifically, a proportion of the sucrose may be in a range between one lower limit selected from the group consisting of 10 wt%, 15 wt%, 17 wt%, 18 wt%, 20 wt%, 21 wt%, 23 wt%, 25 wt%, 27 wt%, 30 wt%, 35 wt%, 40 wt%, 45 wt%, and 50 wt%; and one upper limit selected from the group consisting of 95 wt%, 90 wt%, 85 wt%, 80 wt%, 75 wt%, 70 wt%, 65 wt%, 63 wt%, 61 wt%, and 60 wt%, and for example, may be 10 to 95 wt%, 10 to 90 wt%, 10 to 85 wt%, 10 to 80 wt%, 10 to 75 wt%, 10 to 70 wt%, 10 to 65 wt%, 10 to 60 wt%, 15 to 95 wt%, 15 to 90 wt%, 15 to 85 wt%, 15 to 80 wt%, 15 to 75 wt%, 15 to 70 wt%, 15 to 65 wt%, 15 to 60 wt%, 17 to 95 wt%, 17 to 90 wt%, 17 to 85 wt%, 17 to 80 wt%, 17 to 75 wt%, 17 to 70 wt%, 17 to 65 wt%, 17 to 60 wt%, 18 to 95 wt%, 20 to 90 wt%, 21 to 85 wt%, 23 to 80 wt%, 25 to 95 wt%, 25 to 90 wt%, 25 to 85 wt%, 25 to 80 wt%, 25 to 75 wt%, 25 to 70 wt%, 25 to 65 wt%, 25 to 60 wt%, 25 to 63 wt%, 27 to 63 wt%, 27 to 61 wt%, 35 to 95 wt%, 35 to 90 wt%, 35 to 85 wt%, 35 to 80 wt%, 35 to 75 wt%, 35 to 70 wt%, 35 to 65 wt%, 35 to 60 wt%, 45 to 95 wt%, 45 to 90 wt%, 45 to 85 wt%, 45 to 80 wt%, 45 to 75 wt%, 45 to 70 wt%, 45 to 65 wt%, or 45 to 60 wt%, with respect to 100 parts by weight of the sauce composition, but is not limited thereto.

In an embodiment, the sauce composition of the present disclosure may include a saccharide and sucrose, and the proportion of the sucrose may be 10 to 95 wt% with respect to 100 wt% of the saccharide included in the sauce composition. Specifically, a proportion of the sucrose may be in a range between one lower limit selected from the group consisting of 10 wt%, 15 wt%, 17 wt%, 18 wt%, 20 wt%, 25 wt%, 30 wt%, 35 wt%, 40 wt%, 45 wt%, and 50 wt%; and one upper limit selected from the group consisting of 95 wt%, 90 wt%, 85 wt%, 80 wt%, 75 wt%, 70 wt%, 65 wt%, and 60 wt%, and for example, may be 10 to 95 wt%, 10 to 90 wt%, 10 to 85 wt%, 10 to 80 wt%, 10 to 75 wt%, 10 to 70 wt%, 10 to 65 wt%, 10 to 60 wt%, 15 to 95 wt%, 15 to 90 wt%, 15 to 85 wt%, 15 to 80 wt%, 15 to 75 wt%, 15 to 70 wt%, 15 to 65 wt%, 15 to 60 wt%, 17 to 95 wt%, 17 to 90 wt%, 17 to 85 wt%, 17 to 80 wt%, 17 to 75 wt%, 17 to 70 wt%, 17 to 65 wt%, 17 to 60 wt%, 25 to 95 wt%, 25 to 90 wt%, 25 to 85 wt%, 25 to 80 wt%, 25 to 75 wt%, 25 to 70 wt%, 25 to 65 wt%, 25 to 60 wt%, 35 to 95 wt%, 35 to 90 wt%, 35 to 85 wt%, 35 to 80 wt%, 35 to 75 wt%, 35 to 70 wt%, 35 to 65 wt%, 35 to 60 wt%, 45 to 95 wt%, 45 to 90 wt%, 45 to 85 wt%, 45 to 80 wt%, 45 to 75 wt%, 45 to 70 wt%, 45 to 65 wt%, or 45 to 60 wt%, with respect to 100 parts by weight of the saccharides, but is not limited thereto.

In the sauce composition, in the case in which the proportion of the sucrose is within the range with respect to 100 wt% of the sauce composition or 100 wt% of the saccharides, when the fried food is coated with the sauce composition, a proportion of moisture in the sauce composition, which is absorbed or transferred into the surface of the fried food or the batter is lowered, thereby preventing dampness of the fried food or batter, and thus, imparting crispy texture to the fried food.

In an exemplary embodiment, the sauce composition of the present disclosure has a characteristic in which when a sponge having an area of 6.75 cm$^2$ is coated with 2.5 g of the sauce composition, it takes 1 minute or more to completely absorb the sauce composition into the sponge.

Specifically, when a sponge having an area of 6.75 cm$^2$ is coated with 2.5 g of the sauce composition of the present disclosure, it takes 1 minute or more to completely absorb the composition into the sponge, and for example, it may take 1 minute to 200 minutes, 1 minute to 180 minutes, 1 minute to 160 minutes, 1 minute to 150 minutes, 1 minute to 140 minutes, 1 minute to 130 minutes, 1 minute to 120 minutes, 1 minute to 100 minutes, 1 minute to 80 minutes, 1 minute to 60 minutes, 1 minute to 40 minutes, 1 minute to 20 minutes, 1 minute to 15 minutes, 1 minute to 13 minutes, 1 minute to 12 minutes, 1 minute to 11 minute, or 1 minute to 10 minutes, but the present disclosure is not limited thereto. The sponge may be manufactured from synthetic resin, specifically made of a melamine material, and more specifically may use commercially available Frog Magic Block (trade name, available from BASF, Germany), but is not limited thereto.

In an embodiment, the sauce composition of the present disclosure may include sucrose and starch sugar.

A weight ratio of the sucrose to the starch sugar in the sauce composition may be 20:45 to 62:3. Specifically, the weight ratio of the sucrose to the starch sugar in the sauce composition may be 20:45 to 62:3, 20:45 to 61:4, 25:40 to 62:3, 25:40 to 61:4, 30:35 to 62:3, 30:35 to 61:4, 35:30 to 62:3, 35:30 to 61:4, 40:25 to 62:3, 40:25 to 61:4, 45:20 to 62:3, 45:20 to 61:4, 50:15 to 62:3, 50:15 to 61:4, but is not limited thereto.

The starch sugar is a sugar derived from starch, and may include one or more selected from the group consisting of high fructose, maltose, and starch syrup, and may be in the form of powder or liquid (syrup). When the starch sugar is in a liquid form, the solid content may be 70 to 90 parts by weight, 72 to 85 parts by weight, 73 to 80 parts by weight, 74 to 78 parts by weight, or 75 to 77 parts by weight, based on 100 parts by weight of the starch sugar liquid.

In the case in which the weight ratio of the sucrose to the starch sugar in the sauce composition of the present disclosure is the ratio described above, when fried food is coated with the sauce composition, a proportion of moisture being in the sauce composition, which is absorbed or transferred into the surface of the fried food or the batter is lowered, thereby preventing dampness of the fried food or batter, and thus, imparting crispy texture to the fried food.

In the present disclosure, the sauce composition may further include a fermented sauce, and the fermented sauce is not particularly limited as long as it is known in the art.

Specifically, the fermented sauce may be fermented condiments, and for example, may include soy sauce, red pepper paste, or soybean paste, or may include a sauce manufactured using soy sauce, red pepper paste, or soybean paste as a base.

In the present disclosure, the fermented sauce may be included at 20 to 45 wt% based on the total sauce composition. Specifically, it may be included at 20 to 45 wt%, 20 to 43 wt%, 20 to 40 wt%, 25 to 45 wt%, 25 to 43 wt%, 25 to 40 wt%, 30 to 45 wt%, 30 to 43 wt%, 30 to 40 wt%, 35 to 45 wt%, 35 to 43 wt%, or 35 to 40 wt%.

The soy sauce is not particularly limited as long as it is commonly known soy sauce, and specifically, may be soy sauce for soup, dark soy sauce, brewed soy sauce, tasty soy sauce, or acid hydrolyzed soy sauce (amino acid soy sauce). More specifically, it is preferred that the soy sauce is dark soy sauce which has pleasant taste, salty taste, and sweet taste and may serve as a source of salt, amino acid, and protein. The content of the soy sauce may be 4 to 8 wt%, 4.5 to 7.5 wt% 5.0 to 7.0 wt%, or 5.5 to 6.5 wt%, based on the total weight of the sauce composition. Since the content of the soy sauce is within the range, harmony of sweet and salty tastes of the sauce composition may be optimized to implement food having significantly improved flavor.

The red pepper paste is not particularly limited as long as it is commonly known red pepper paste, and specifically, may be glutinous rice red pepper paste, nonglutinous rice red pepper paste, brown rice red pepper paste, wheat flour red pepper paste, barley red pepper paste, taffy red pepper paste, or sauteed red pepper paste. The red pepper paste may serve as a source of beneficial nutritional ingredients such as protein, fat, vitamin B2, vitamin C, and carotene. The content of the red pepper paste may be 1.0 to 8.0 wt%, 2.0 to 7.0 wt%, 3.0 to 6.0 wt%, or 3.5 to 5.5 wt%, based on the total weight of the sauce composition. Since the content of the red pepper paste is within the range, harmony of spicy and salty tastes of the sauce composition may be optimized to implement food having significantly improved flavor. The soybean paste is not particularly limited as long as it is commonly known soybean paste, and specifically, may be makdoenjang, tojang, makjang, tofu paste, or cheongtaejang. The soybean paste may serve to remove odor and supply beneficial bacteria such as Bacillus.

The sauce composition of the present disclosure may commonly further comprise a known seasoning ingredient. The seasoning ingredient may be a material having a liquid, solid, powder, or gel form. In addition, the seasoning ingredient may be a material for sweet, salty, spicy, or savory taste.

Specifically, the seasoning ingredient may include one or more selected from the group consisting of sweet ingredients such as oligosaccharide, lactose, honey, and fruit juice; salty ingredients such as refined salt and bamboo salt; spicy ingredients such as red pepper powder and capsaicin; and savory ingredients such as oyster sauce, mipung, brown sauce, kelp concentrate, Dashida, ketchup, mayonnaise, fermented soybean concentrate, soybean oil, Worcester sauce, oleoresin paprika, garlic, pepper, cinnamon powder, doubanjiang, and tsuyu.

The content of the seasoning ingredient may be appropriately adjusted depending on the desired physical properties and taste of the sauce composition of the present disclosure.

The sauce composition of the present disclosure is used for coating fried food.

In an embodiment, the coating may be coating by spray coating.

The fried food may be food manufactured by frying a raw material of food selected from the group consisting of chicken, pork, beef, fish flesh, and vegetable protein raw materials.

The fried food may be manufactured by applying batter on the surface of the raw material and then frying.

The applying of batter may include curing the raw material; aging the cured raw material; and powdering and battering the aged raw material.

Since the fried food to which the sauce composition is applied in the present disclosure is the same as the fried food described in the method of manufacturing fried food described later, the description of the fried food refers to the description of the fried food below and will not be repeated.

Another aspect of the present disclosure provides a use of the sauce composition comprising sucrose for coating fried food.

In the use of the present disclosure, the sauce composition may have a sugar content of 60 to 90 brix.

In the use of the present disclosure, the sauce composition may have a viscosity of 50 to 1,000 cP.

In an embodiment, the sauce composition may include saccharides.

In an embodiment, the sauce composition may include sucrose, and a proportion of the sucrose may be 10 to 95 wt% with respect to 100 wt% of the sauce composition.

In an embodiment, the sauce composition may include a saccharide and sucrose, and the proportion of the sucrose may be 10 to 95 wt% with respect to 100 wt% of the saccharide included in the sauce composition.

In an embodiment, the sauce composition has a characteristic in which when a sponge having an area of 6.75 cm$^2$ is coated with 2.5 g of the sauce composition, it takes 1 minute or more to completely absorb the sauce composition into the sponge.

In an embodiment, the sauce composition may include sucrose and starch sugar. A weight ratio of the sucrose to the starch sugar in the sauce composition may be 20:45 to 62:3.

In an embodiment, the sauce composition may further include a fermented sauce, and the fermented sauce is not particularly limited as long as it is known in the art.

In the use of the present disclosure, since the sauce composition is as described above for an aspect of the sauce composition of the present disclosure, the detailed description of the sauce composition refers to the above description of the sauce composition, and will not be repeated.

In the use of the present disclosure, since the fried food to which the sauce composition is applied in the present disclosure is the same as the fried food described in the method of manufacturing fried food described later, the detailed description of the fried food refers to the description of the fried food below and will not be repeated.

Another aspect of the present disclosure provides a method of manufacturing fried food including:

applying batter on a surface of a food raw material;
frying the food raw material covered with the batter to obtain fried food; and
coating a surface of the fried food with the sauce composition of the aspect of the present disclosure by spraying the sauce composition on the fried food.

The manufacturing method of the present disclosure includes applying batter on a surface of a food raw material.

In an embodiment, the applying of batter on a surface of a food raw material may include: curing the food raw material; aging the cured food raw material; and powdering and battering the aged food raw material.

In the present disclosure, though the food raw material is not particularly limited, considering consumer preference, food processability, long-term storage of food, and the like, the food raw material may be selected from the group consisting of chicken, pork, beef, fish flesh, and vegetable protein raw materials (Textured Vegetable Protein).

The food raw material may be stored in a frozen state after dismantling and washing. A method of cooking the raw material is not particularly limited, and specifically, boiling, simmering, blanching, frying, steaming, stir-frying, baking, or a combination thereof may be applied.

The curing of the food raw material may include mixing a raw material with a saline solution and then tumbling.

The saline solution may be a commonly known saline solution, and specifically, may include one or more selected from the group consisting of water (purified water), isolated soy protein, corn starch, refined salt, and powdered pepper. Herein, when the raw material is in a frozen state, the raw material may be mixed with the saline solution, after microwave high-frequency thawing, radio frequency (RF) thawing, or natural thawing at room temperature.

The tumbling of the raw material mixed with the saline solution may be performed at a speed of 3 to 10 rpm for 20 to 50 minutes. Since the tumbling is performed under the conditions, the raw material and the saline solution may be uniformly mixed. Specifically, the tumbling may be performed at a speed of 3 to 10 rpm, 4 to 9 rpm, or 3 to 8 rpm for 20 to 50 minutes, 20 to 45 minutes, or 35 to 40 minutes. Since the tumbling is performed under the conditions, the raw material and the saline solution may be uniformly mixed.

The aging of the cured food raw material may include storing the cured raw material obtained after the tumbling process at a low temperature. Specifically, the cured raw material may be aged in a cold-storage warehouse at 0 to 10°C for 2 to 30 hours. Specifically, the raw material may be aged by storing it in a cold-storage warehouse at 0 to 10°C or 1 to 7°C for 2 to 30 hours or 5 to 25 hours. Since the aging is performed under the conditions, an aged raw material which is soft and into which the saline solution penetrates well may be obtained. The aged raw material obtained as such may be further subjected to a process of cutting it into a required size before powdering and battering.

The powdering and battering of the aged food raw material may include putting powder on the aged food raw material and then mixing it with a battering solution, or mixing the aged food raw material with a mixed dough of powder and a battering solution. The powder and the battering solution may be those commonly known in the art. Herein, the amount of the powder used may be 1 to 10 wt% of the weight of the aged raw material, and the amount of the battering solution used may be 10 to 40 wt% of the weight of the aged raw material.

The manufacturing method of the present disclosure may include obtaining fried food by frying the food raw material covered with the batter.

The frying of the food raw material covered with the batter may be performed by an oil bath treatment known in the art. The conditions of the oil bath treatment may be adjusted by the conditions and the sizes of the powdered and battered raw material. The oil bath treatment may be performed once or more times, specifically 1 to 3 times for increasing crispness of the surface of the fried food formed by the oil bath treatment. For example, the oil bath treatment may include adding a food raw material covered with the batter to oil at a temperature of 170 to 190°C, specifically 175 to 185°C, performing a first heat treatment and taking out the material, and then adding the first heat-treated raw material to oil again and performing a second heat treatment. The first and second heat treatments may be performed within 10 minutes.

For example, the first heat treatment may be performed for 40 to 80 seconds, specifically 45 to 75 seconds, and the second heat treatment may be performed for 200 to 300 seconds, specifically 220 to 280 seconds, but is not limited thereto.

The manufacturing method of the present disclosure includes coating a surface of the fried food with the sauce composition of the aspect of the present disclosure by spraying the sauce composition on the fried food.

The coating may include mixing the fried food with the sauce composition while spraying the sauce composition on fried food. An example of a method used for mixing includes tumbling (rotating) or using a conveyor belt, but is not limited thereto.

In an embodiment, coating a surface of the fried food with the sauce composition may be carried out while tumbling (rotating) the fried food in a tumbler.

The fried food is added to a tumbler and the sauce composition is sprayed on the fried food while tumbling (rotating) to coat the surface of the fried food with the sauce composition.

The step may include adding the fried food to sauce coating equipment and moving the fried food along an equipment line, and adding the moved fried food to a tumbler and performing tumbling.

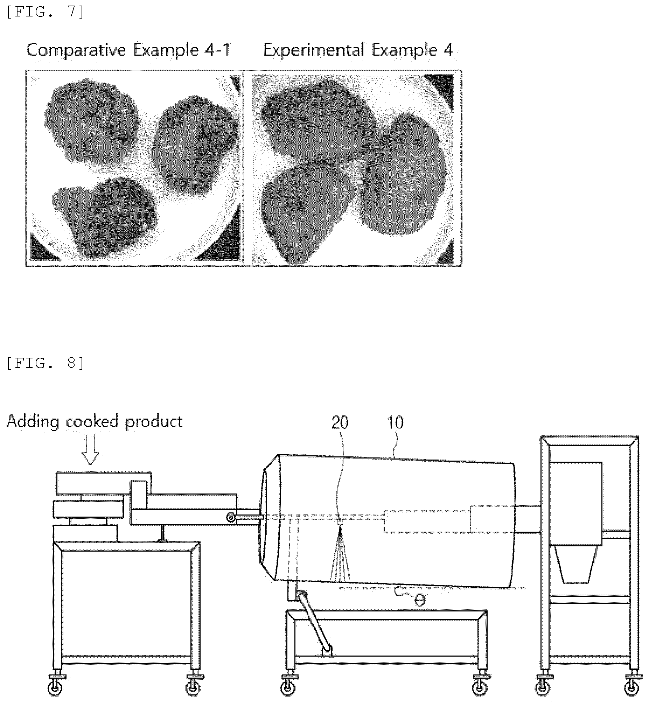

Specifically, referring to FIG. 8, when the fried food (cooked food) is added to sauce coating equipment, it moves along the equipment line and is added to a tumbler 10. Subsequently, the fried food (cooked food) added to the tumbler 10 may be tumbled by rotation of the tumbler 10. Herein, an amount of the fried food (cooked food) added may be automatically measured in real time by a system which controls the sauce coating equipment.

A rotation speed of the tumbler 10 is not particularly limited, and may be adjusted depending on the weight of the fried food (cooked food) added.

In an embodiment, the rotation speed of the tumbler 10 may be 2 to 12 rpm. More specifically, the rotation speed may be 2.2 to 11.8 rpm, 2.4 to 11.6 rpm, 2.6 to 11.4 rpm, 2.8 to 11.2 rpm, 3.0 to 11.0 rpm, 3.5 to 10.5 rpm, or 3 to 10 rpm. Since the rotation speed of the tumbler 10 is within the range, the fried food (cooked food) may be uniformly coated with the sauce composition while minimizing the fried food (cooked food) sticking together.

In an embodiment, the tumbler 10 may be tilted so as to have a predetermined inclination angle. Specifically, the inclination angle ($\theta$) of the tumbler 10 may be 4° to 6°. More specifically, the inclination angle ($\theta$) of the tumbler 10 may be 4.2° to 5.8°, 4.5° to 5.5°, or 4.8° to 5.3°. Since the inclination angle ($\theta$) of the tumbler 10 is within the range, the fried food (cooked food) may be uniformly coated with the sauce composition while minimizing the fried food (cooked food) sticking together.

By using spray method in the present disclosure, the surface of the fried food may be thinly coated with the sauce composition.

In an embodiment, an injection pressure of spraying the sauce composition may be 0.2 to 3.5 bar. Specifically, the injection pressure may be 0.2 to 3.4 bar, 0.2 to 3.2 bar, 0.2 to 3 bar, 0.2 to 2.3 bar, 0.2 to 2.5 bar, 0.3 to 3.4 bar, 0.3 to 3 bar, 0.3 to 2.3 bar, 0.3 to 2.5 bar, 0.3 to 2.0 bar, 0.3 to 1 bar, 0.3 to 1.5 bar, or 0.3 to 0.8 bar.

Since the injection pressure of spraying the sauce composition is within the range, the surface of the fried food may be thinly coated with the sauce composition while supplying the sauce composition to the fried food well.

The spray of the sauce composition may be performed through an injection nozzle.

The spray may be performed by controlling the injection conditions of the nozzle.

The conditions of the spray of the sauce composition are not particularly limited, and may be adjusted depending on the weight of the fried food added to the tumbler 10.

In an embodiment, the sauce composition may be sprayed through an injection nozzle 20.

An injection pressure of the sauce composition which is sprayed through the injection nozzle 20 may be 0.2 to 3.5 bar. Specifically, the injection pressure may be 0.2 to 3 bar, 0.2 to 2.5 bar, 0.3 to 2.5 bar, 0.3 to 2.0 bar, 0.3 to 1.5 bar, or 0.3 to 0.8 bar.

In an embodiment, the injection pressure of the sauce composition may be pressure formed in piping between a sauce supply tank and a spray injection nozzle.

In an embodiment, during spraying the sauce composition, 1.0 to 4.0 bar of air may be injected to a supply line of the sauce composition with the sauce composition. Specifically, during the spraying, air having a pressure of 1.3 to 3.8 bar, 1.5 to 3.4 bar, 1.5 to 3.3 bar, 1.5 to 3.2 bar, 1.6 to 3.1 bar, or 1.8 to 3.0 bar may be injected. Since the air is injected within the pressure range, the sauce composition may be sprayed finely and uniformly to obtain fried food covered with the sauce composition to a desired level.

In the present disclosure, in the coating of the surface of the fried food with the sauce composition described above, the sauce composition is heated to a certain temperature and then sprayed on the fried food to coat the fried food with the sauce composition.

The temperature of the sauce composition to be sprayed may be 40°C to 90°C, and specifically, in a range between a lower limit selected from the group consisting of 40°C, 45°C, 50°C, 55°C, 57°C, 58°C, 60°C, 62°C, 65°C, 67°C, 70°C, 72°C, 75°C, 77°C, 80°C, and 85°C; and an upper limit selected from the group consisting of 90°C, 88°C, 86°C, 84°C, 82°C, 80°C, 75°C, 70°C, 67°C, 66°C, and 65°C, and as an example, may be 45 to 90°C, 50 to 90°C, 50 to 85°C, 55 to 90°C, 55 to 85°C, 55 to 80°C, 55 to 75°C, 45 to 80 °C, 48 to 77 °C, 51 to 74 °C, 54 to 71 °C, 57 to 68 °C, 58 to 67 °C, 59 to 66 °C, or 60 to 65 °C, but is not limited thereto.

When the temperature of the sauce composition is within the range, the sauce composition has a viscosity appropriate for being sprayed, so that the sauce composition may be uniformly sprayed on the fried food without causing a nozzle blockage problem.

In an embodiment, the temperature of the sauce composition may be set considering the sugar content (brix) of the sauce composition and/or the proportion of sucrose in the sauce composition, for the viscosity appropriate for spraying, and as an example, may be set by a relation of $Y = aX + b$ (a=2.2, -130<b<-100) written with X (brix) and Y (temperature, °C) as variables, or a relation of $Z = aX + bY + c$ (a=1.5, b=0.79, -111<c<-56) written with X (brix), Y (proportion of sucrose in the sauce composition), and Z (temperature, °C) as variables.

The temperature at which the sauce composition is coated may be 0°C to 50°C, and specifically 0 to 50°C, 0 to 45°C, 0 to 40°C, 5 to 50°C, 5 to 45°C, 5 to 40°C, 10 to 50°C, 10 to 45°C, 10 to 40°C, 10 to 35°C, 15 to 50°C, 15 to 45°C, 15 to 40°C, 15 to 35°C, 20 to 50°C, 20 to 45°C, 20 to 40°C, 20 to 35°C, 25 to 50°C, 25 to 45°C, 25 to 40°C, 25 to 35°C, 30 to 50°C, 30 to 45°C, 30 to 40°C, or 30 to 35°C, and the temperature at which the sauce composition is coated may be maintained at a temperature lower than the temperature of the sauce composition being sprayed described above.

When the temperature at which the sauce composition is coated is within the range, the sauce composition may be uniformly sprayed on the fried food and bound to the food.

The sauce composition which is sprayed on the fried food may be a sauce composition in an aspect of the present disclosure. Specifically, the sprayed sauce composition is a sauce composition for coating fried food, which includes sucrose, and has a sugar content of 60 to 90 brix and a viscosity at 80°C of 50 to 1,000 cP.

Since the detailed description of the sauce composition is as described above for the sauce composition in an aspect of the present disclosure, it refers to the above description and will not be repeated.

The coating with the sauce composition may include spraying the sauce composition on fried food and mixing the sauce composition and the fried food, and an example of a mixing method includes tumbling (rotating) or using a conveyor belt, but is not limited thereto.

In an embodiment, coating of a surface of the fried food with the sauce composition may be carried out while tumbling (rotating) the fried food in a tumbler.

Specifically, the spraying the sauce composition may be performed simultaneously with the tumbling or after the tumbling.

The coating with the sauce composition may be performed at a sauce application rate (Equation 1) of 2 to 30% so that the fried food has flavor and crispy texture to a required level. Specifically, the application rate of the sauce composition on the fried food may be 2 to 30%, 2 to 26%, 2 to 25%, 2 to 24%, 2 to 20%, 2 to 18%, 2 to 17%, 2 to 15%, 3 to 20%, 3 to 18%, 3 to 15%, 2 to 14%, 3 to 14%, 2 to 13%, 3 to 13%, 4 to 20%, 4 to 18%, 4 to 15%, 4 to 13%, 5 to 20%, 5 to 18%, 5 to 15%, 5 to 13%, 6 to 20%, 6 to 18%, 6 to 15%, 6 to 13%, 7 to 20%, 7 to 18%, 7 to 15%, 7 to 13%, 8 to 20%, 8 to 18%, 8 to 15%, or 8 to 13%. The sauce application rate refers to a value calculated by the following Equation 1:

[Equation 1]

$$\text{Application rate (\%)} = (W1 - W0)/(W0) \times 100$$

wherein

W1 is a weight (kg) of fried food after coating the sauce composition, and
W0 is a weight (kg) of fried food before coating the sauce composition.

In an embodiment, the time to coat the fried food with the sauce composition may vary with the spray speed and the application rate of the sauce composition, but may be within 5 minutes based on the time for the fried food to pass through a sauce composition spray device. Specifically, the sauce composition coating time for the fried food may be 1 second to 5 minutes, 1 second to 4 minutes, 1 second to 3 minutes, 1 second to 2 minutes, 1 second to 1 minute, 10 seconds to 4 minutes, 10 seconds to 2 minutes, 10 seconds to 3 minutes, 10 seconds to 1 minute, 20 seconds to 4 minutes, 20 seconds to 3 minutes, 20 seconds to 2 minutes, 20 seconds to 1 minute, 30 seconds to 4 minutes, 30 seconds to 3 minutes, 30 seconds to 2 minutes, or within 30 seconds to 1 minute, but is not limited thereto.

In an embodiment, the time for the fried food to be coated with the sauce composition may vary with the spray speed and the application rate of the sauce composition, but may be within 5 minutes based on the time for the fried food to pass through the tumbler. Specifically, the sauce composition coating time for the fried food may be 1 second to 5 minutes, 1 second to 4 minutes, 1 second to 3 minutes, 1 second to 2 minutes, 1 second to 1 minute, 10 seconds to 4 minutes, 10 seconds to 2 minutes, 10 seconds to 3 minutes, 10 seconds to 1 minute, 20 seconds to 4 minutes, 20 seconds to 3 minutes, 20 seconds to 2 minutes, 20 seconds to 1 minute, 30 seconds to 4 minutes, 30 seconds to 3 minutes, 30 seconds to 2 minutes, or within 30 seconds to 1 minute, based on the time for the fried food to pass through the tumbler, but is not limited thereto.

In an embodiment, the method of the present disclosure may further include freezing the fried food coated with the sauce composition.

The freezing may be quickly freezing the fried food coated with the sauce composition.

The quick-freezing may be performed by treating it at a temperature of -45°C to -35°C for 1 minute to 80 minutes. Specifically, it may be performed by treating it at a temperature of -45°C to -35°C for 1 minute to 80 minutes, 1 minute to 70 minutes, 1 minute to 60 minutes, or 1 minute to 50 minutes.

The quick-freezing process may be performed by a commonly known process.

Specifically, the quick-freezing may be performed by transferring the fried food coated with the sauce composition to a quick-freezing device at -45°C to -35°C through a conveyor, and freezing the cooked food to -10°C or lower for 20 to 70 minutes by a cooling fan. Fried food coated with the sauce composition in a frozen state may be obtained through the quick-freezing.

The obtained frozen food may be commercialized through post-processing, a packaging process, and the like.

In another aspect of the present disclosure, frozen fried food coated with the sauce composition described above is provided.

The frozen fried food may be frozen fried food having an application rate of the sauce composition by the following Equation 1 of 2 to 30%:

$$[\text{Equation 1}]$$

$$\text{Application rate (\%)} = (W1 - W0)/(W0) \times 100$$

wherein

W1 is a weight (kg) of fried food after coating the sauce composition, and
W0 is a weight (kg) of fried food before coating the sauce composition.

In an embodiment, the fried food may be manufactured by a manufacturing method including:

applying batter on a surface of a food raw material;
frying the food raw material covered with the batter to obtain fried food; and
coating a surface of the fried food with the sauce composition of the present disclosure described above by heating the sauce composition to a temperature of 40°C to 90°C and then spraying the heated sauce composition on the fried food.

In an embodiment,

the coating of the surface of the food raw material with batter may include:
curing the food raw material;
aging the cured food raw material; and
powdering and battering the aged food raw material.

Since the detailed description of the fried food is the same as the description of the method of manufacturing fried food as another aspect of the present disclosure described above, it refers to the above description and will not be repeated.

The sauce composition coated on the frozen fried food may be the sauce composition in an aspect of the present disclosure. Specifically, the sauce composition is a sauce composition for coating fried food, which includes sucrose, has a sugar content of 60 to 90 brix and has a viscosity at 80°C of 50 to 1,000 cP.

Since the detailed description of the sauce composition is as described above for the sauce composition in an aspect of the present disclosure, it refers to the above description and will not be repeated.

The application rate of the sauce composition on the frozen fried food may be 2 to 30%, 2 to 26%, 2 to 25%, 2 to 24%, 2 to 20%, 2 to 18%, 2 to 17%, 2 to 15%, 3 to 20%, 3 to 18%, 3 to 15%, 2 to 14%, 3 to 14%, 2 to 13%, 3 to 13%, 4 to 20%, 4 to 18%, 4 to 15%, 4 to 13%, 5 to 20%, 5 to 18%, 5 to 15%, 5 to 13%, 6 to 20%, 6 to 18%, 6 to 15%, 6 to 13%, 7 to 20%, 7 to 18%, 7 to 15%, 7 to 13%, 8 to 20%, 8 to 18%, 8 to 15%, or 8 to 13%.

When the application rate of the sauce composition is within the range described above, an amount of the sauce composition absorbed into the batter of the fried food is minimized and most of the sauce composition is placed on the outermost surface of the batter, so that dampness of the fried food is prevented, thereby significantly improving crispy texture of the fried food.

In an embodiment, the fried food may be food for a microwave, oven, or air fryer. Specifically, microwave cooking may be cooking with a microwave oven (1,000 W or 700 W) and a cooking time may be 1 minute to 5 minutes, 1 minute 30 seconds to 3 minutes, 2 minutes to 3 minutes, and oven or air fryer cooking may be set at a temperature of 130 to 200°C, 130 to 190°C, 130 to 180°C, 140°C to 200°C, 140 to 190°C, 140 to 180°C, or 140 to 150°C for 3 minutes to 20 minutes, 4 minutes to 18 minutes, 5 minutes to 15 minutes, 7 minutes to 13 minutes, 8 minutes to 12 minutes, 9 minutes to 12 minutes, or 10 minutes to 12 minutes.

The frozen fried food is thawed using the cooking method, and the crispy texture of the fried food may be significantly improved.

## ADVANTAGEOUS EFFECTS

The sauce composition of the present disclosure has a high sugar content and a high viscosity, and thus, when fried food is coated with the sauce composition, an amount of sauce or moisture included in the sauce adsorbed or transferred into fried food or batter is minimized, and most of the sauce is placed on the outermost surface of the batter. Thus, dampness of the fried food is prevented and the crispy texture and flavor of the fried food may be implemented. In addition, since the sauce-coated fried food of the present disclosure may be obtained without a step of mixing the fried food with separate sauce, eating convenience of consumers may be improved.

However, the effect of the present disclosure is not limited to the effects mentioned above, and other effects which are not mentioned herein may be clearly understood by a person skilled in the art from the following description.

## BRIEF DESCRIPTION OF THE DRAWINGS

FIGS. 1A to 1E show results of measuring viscosities of the sauce compositions of Comparative Example 1-1, Experimental Example 1-1, Experimental Example 1-2, Experimental Example 1-3, and Experimental Example 1-4 while the temperatures were adjusted from 25°C to 80°C, respectively.

FIG. 2 shows results of measuring physical properties related to crispness of chicken nuggets coated with sauces, the chicken nuggets being manufactured by applying the sauce compositions of Comparative Example 1-1, Experimental Example 1-1, Experimental Example 1-2, Experimental Example 1-3, and Experimental Example 1-4 on the chicken nuggets, quickly freezing the chicken nuggets, and cooking them with an air fryer.

FIGS. 3A to 3E show results of measuring viscosities of the sauce compositions of Experimental Example 2-1, Experimental Example 2-2, Experimental Example 2-3, Experimental Example 2-4, and Experimental Example 2-5 while the temperatures of the sauce compositions were adjusted from 25°C to 80°C, respectively.

FIGS. 4A to 4D show results of measuring absorption rates of the sauce compositions of Experimental Example 2-1, Experimental Example 2-2, Experimental Example 2-3, Experimental Example 2-4, and Experimental Example 2-5 over time after coating sponge with the sauce compositions.

FIG. 5 shows results of measuring physical properties related to crispness of sauce-coated chicken nuggets manufactured by coating chicken nuggets with the sauce compositions of Experimental Example 2-1, Experimental Example 2-2, Experimental Example 2-3, Experimental Example 2-4, and Experimental Example 2-5, quickly freezing the chicken nuggets, and then cooking the chicken nuggets with an air fryer.

FIG. 6 shows results of observing a sauce absorption rate of sauce-coated chicken nuggets manufactured by applying the sauce composition of Experimental Example 1-2 on chicken nuggets with application rates changing from 3% to 25%, quickly freezing the chicken nuggets, and then cooking the chicken nuggets with an air fryer.

FIG. 7 is a photograph showing results of comparing appearance and crispness of chicken coated with the sauce composition by various coating methods. The left photograph is the chicken of Comparative Example 4-1 and the right photograph is the chicken of Experimental Example 4.

FIG. 8 is a drawing of coating equipment for coating fried food with the sauce composition for coating fried food according to an embodiment of the present disclosure.

## MODE FOR CARRYING OUT THE INVENTION

Hereinafter, the present disclosure will be described in detail by the examples. However, the following examples only specifically illustrate the present disclosure, and the content of the present disclosure is not limited by the examples.

## [Experimental Example 1] Experiment of change in brix (sugar content) of sauce composition

## Example 1. Manufacture of sauce composition

35 wt% of sugar (sucrose, CJ Cheiljedang Corp.) and 25 wt% of high fructose syrup (CJ Cheiljedang Corp., solid content of 76 wt% or more, 55% or more based on fructose solid content) were mixed with 40 wt% of Korean fermented bean paste (soy sauce and the like, 55 brix, sucrose: 14 wt%, fructose: 0.03 wt%), and stirring was performed. In order to adjust brix (sugar content), purified water was added at the ratios of Table 1, or the sauce was concentrated by stirring at a high temperature (90±2°C). Changes in mass of the sauce before and after concentration were indicated as a negative value of purified water.

[Table 1]

| Configuration | Comparative Example 1-1 | Experimental Example 1-1 | Experimental Example 1-2 | Experimental Example 1-3 | Experimental Example 1-4 |
|---|---|---|---|---|---|
| Brix (%) | 50 | 60 | 76 | 80 | 85 |
| Purified water (wt%) | 52 | 26 | 0 | -5 | -10 |

**Example 2. Viscosity of sauce composition by temperature**

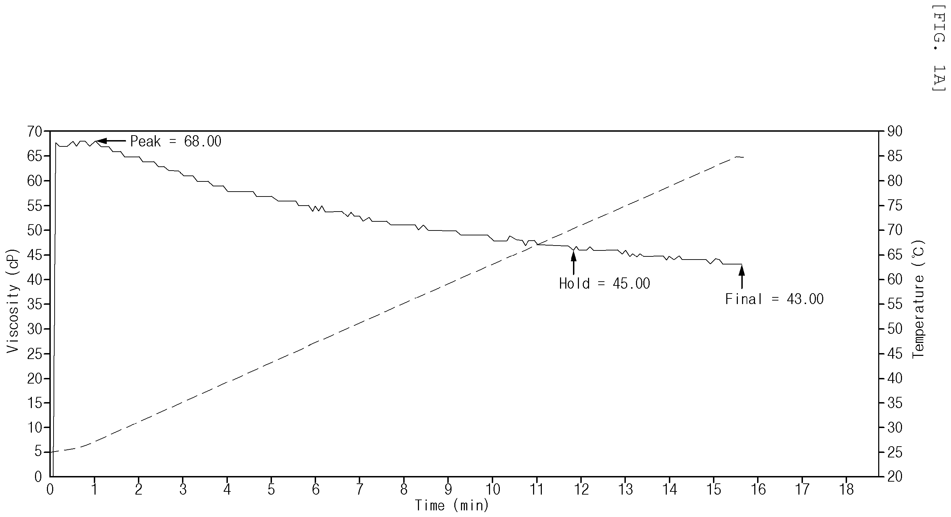

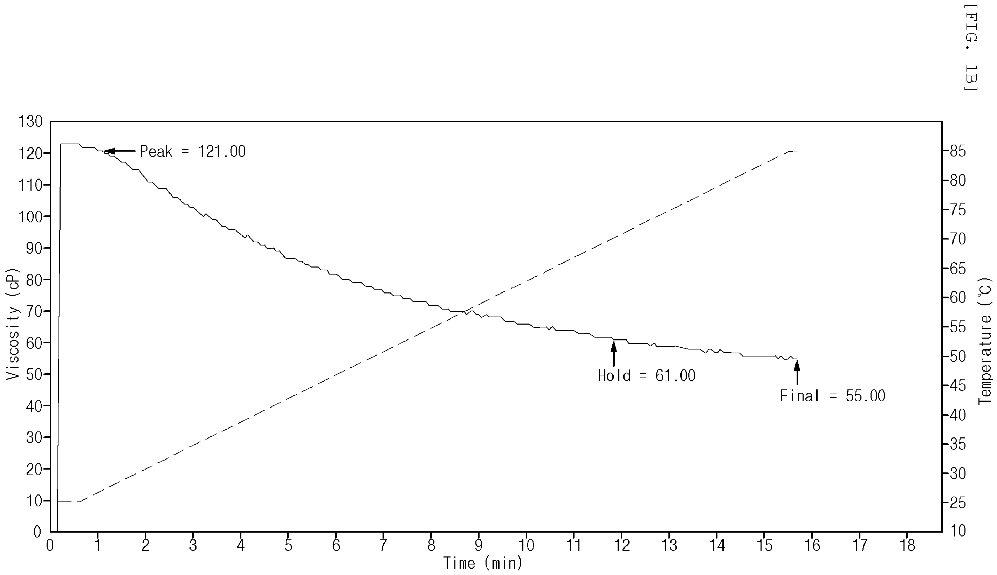

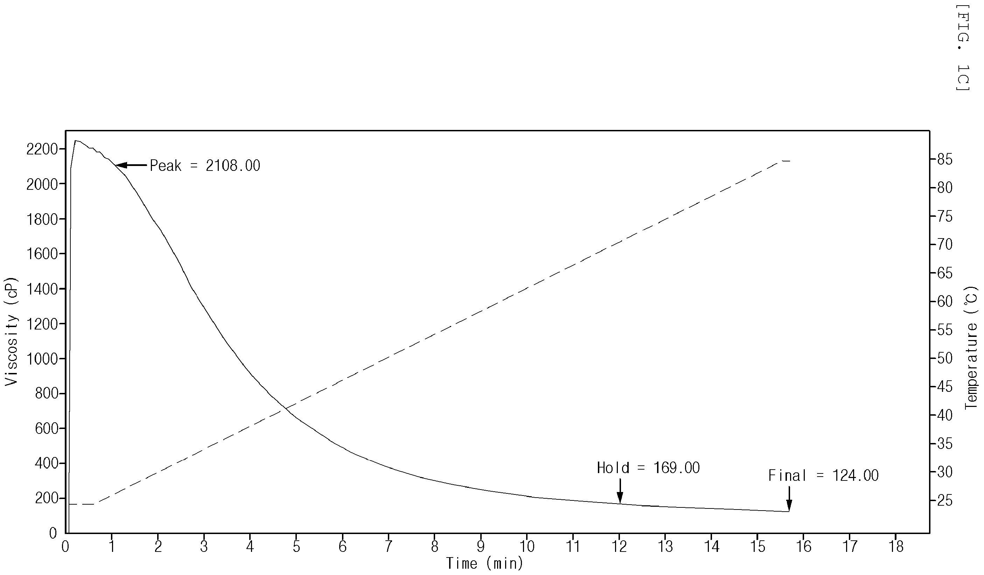

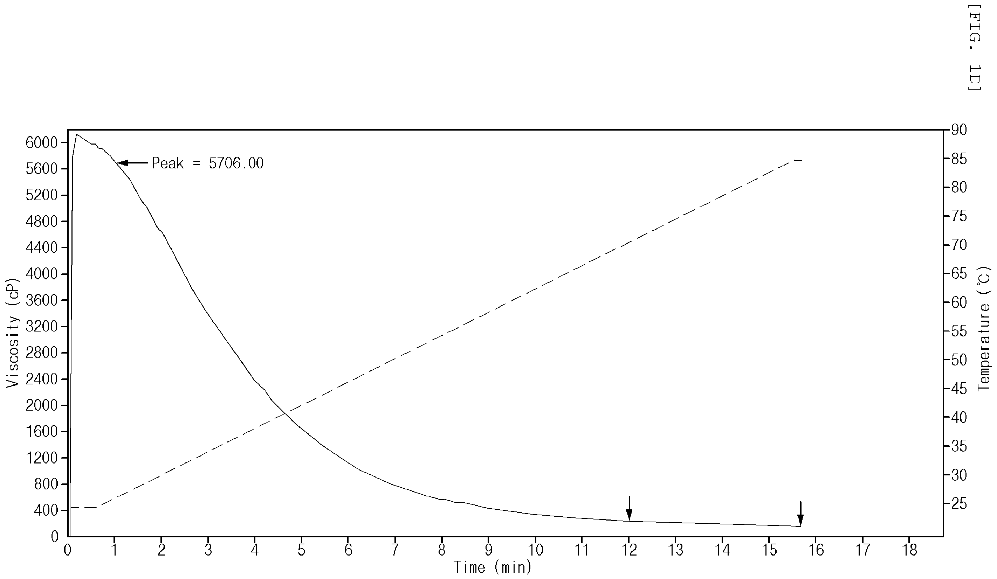

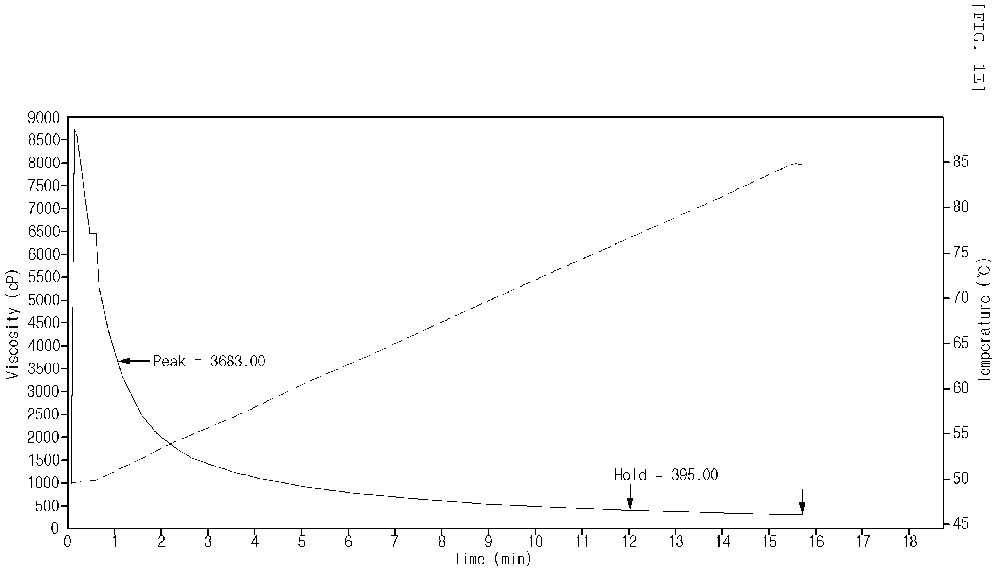

The viscosities of the sauces of Comparative Example 1-1 and Experimental Examples 1-1 to 1-4, manufactured in Example 1 were measured while adjusting the temperature from 25°C to 80°C. The viscosities of the sauce compositions were measured using RVA Perten4500. Specifically, the viscosities of samples (samples of the sauce compositions) were measured in various temperature sections while stirring the samples at a speed of 450 RPM based on 40 g (FIGS. 1A to 1E). Table 2 shows the results of measuring viscosity. When the viscosity of the sauce composition was 1,000 cP or less, the sauce composition had flowability to allow spraying through a nozzle.

[Table 2]

| Temperature (°C) | Viscosity (cP) | | | | |
|---|---|---|---|---|---|
| | Comparative Example 1-1 | Experimental Example 1-1 | Experimental Example 1-2 | Experimental Example 1-3 | Experimental Example 1-4 |
| 25 | 67 | 123 | 2091 | 5812 | Not measurable |
| 30 | 65 | 115 | 1844 | 4910 | Not measurable |
| 40 | 58 | 92 | 839 | 2135 | Not measurable |
| 50 | 54 | 77 | 395 | 844 | 5008 |
| 60 | 49 | 68 | 238 | 400 | 946 |
| 70 | 46 | 61 | 173 | 244 | 521 |
| 80 | 44 | 57 | 137 | 176 | 355 |

**Example 3. Comparison of crispy textures of chicken coated with sauce composition**

The sauce composition manufactured in Example 1 of Experimental Example 1 was applied on chicken nuggets (CJ Cheiljedang Corp.) with a brush at an application rate of 10%, and the chicken nuggets were quickly frozen and kept frozen for 5 days to manufacture frozen chicken. The manufactured frozen chicken was cooked at 140°C for 11 minutes using an air fryer (Phillips, HD9860/95), and cooled for 10 minutes. In order to evaluate the crispy texture of the manufactured chicken nuggets, the average gradient, the force, and the number of peaks were measured using a physical property analyzer (Texture Analyzer Perten 4500). The measurement probe for measurement with the physical property analyzer was a blade type having a width of 1.2 cm, and the measurement was performed at a pre-test speed of 1 mm/s, a test speed of 1 mm/s, and a deformation of 2 cm. Table 3 shows the results of measuring average gradient.

[Table 3]

| Experimental group | Average Gradient (g/sec) |
|---|---|
| Comparative Example 1-1 | 137.7 |
| Experimental Example 1-1 | 83.3 |
| Experimental Example 1-2 | 543.4 |
| Experimental Example 1-3 | 406.0 |
| Experimental Example 1-4 | 473.1 |

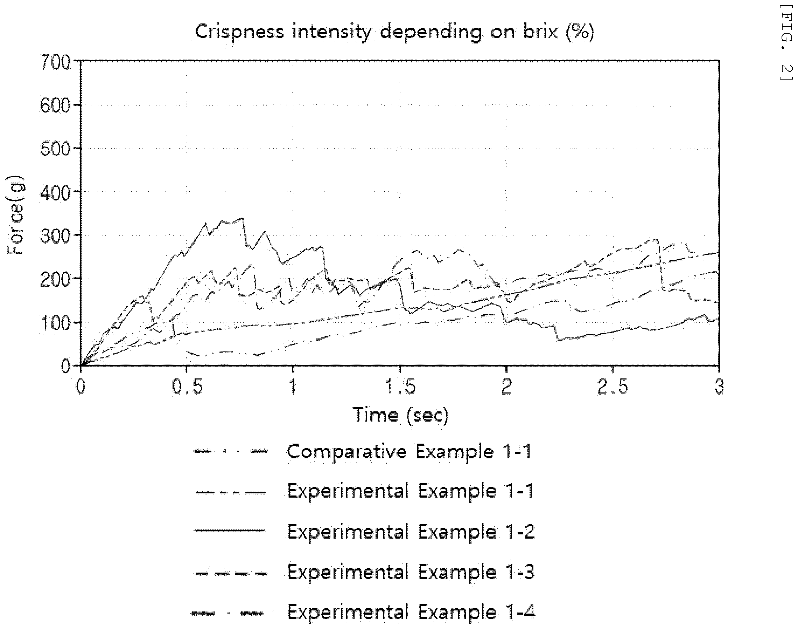

As a results of confirming crispness intensity considering average gradient, force, and the number of peaks, Experimental Example 1-2 (brix: 76) had both the highest average peak force and average gradient to have the highest crispness intensity, and Experimental Example 1-3 (brix: 80) and Experimental Example 1-4 (brix: 85) had the next crispness intensity. Experimental Example 1-1 (brix: 60) and Comparative Example 1-1 (brix: 50) had relatively low crispness intensity (FIG. 2).

**[Experimental Example 2] Experiment of change in composition ratio of saccharides of sauce composition**

**Example 1. Manufacture of sauce composition**

Mixtures of sugar (sucrose, CJ Cheiljedang Corp.) and high fructose syrup (CJ Cheiljedang Corp., solid content: 76 wt% or more, 55 wt% or more based on fructose solid content) were prepared with different weight ratios as shown in Table 4. Korean fermented soy paste (soy sauce and the like, 55 brix, sucrose: 14 wt%, fructose: 0.03 wt%) was added to each prepared mixture to make 40 wt%, and mixing with stirring was performed to manufacture a sauce composition. The contents of sucrose based on the total sauce composition including even the content of sugar included in the Korean fermented soy paste are shown in Table 4 together. The sauce compositions having the sucrose and high fructose contents of Experimental Examples 2-1 to 2-5 had stability without crystal precipitation at room temperature, and when the content of sucrose was increased as compared with that of Experimental Example 2-5, a small amount of crystals were precipitated at room temperature.

[Table 4]

| Configuration | Experime ntal Example 2-1 | Experime ntal Example 2-2 | Experime ntal Example 2-3 | Experime ntal Example 2-4 | Experime ntal Example 2-5 |
|---|---|---|---|---|---|
| Sucrose (wt%) | 15 | 25 | 35 | 45 | 55 |
| High fructose (wt%) | 45 | 35 | 25 | 15 | 5 |
| Sugar content (wt%) based on total sauce composition | 20.6 | 30.6 | 40.6 | 50.6 | 60.6 |
| (based on amounts of sugar and high fructose added) | | | | | |

**Example 2. Viscosity of sauce composition by temperature**

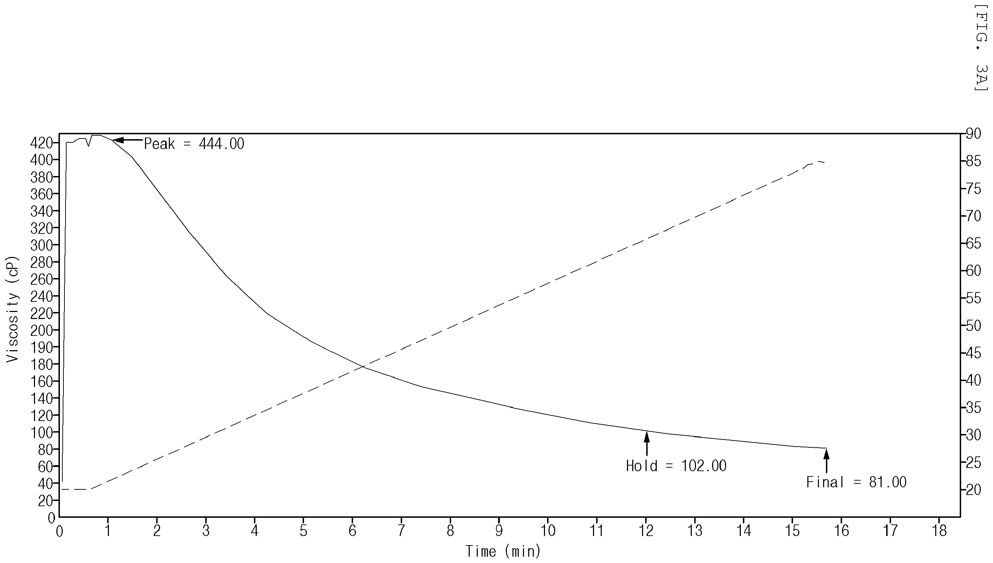

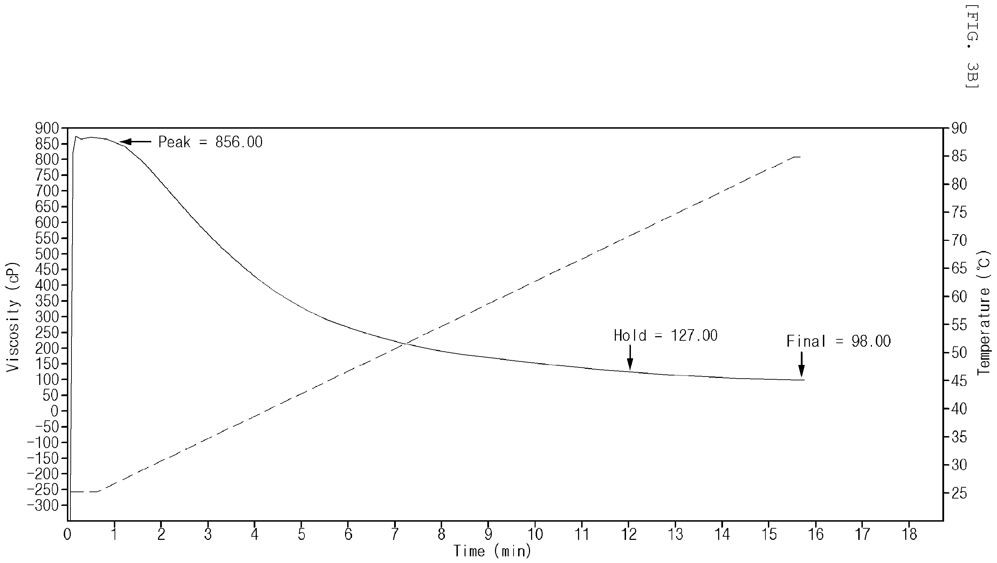

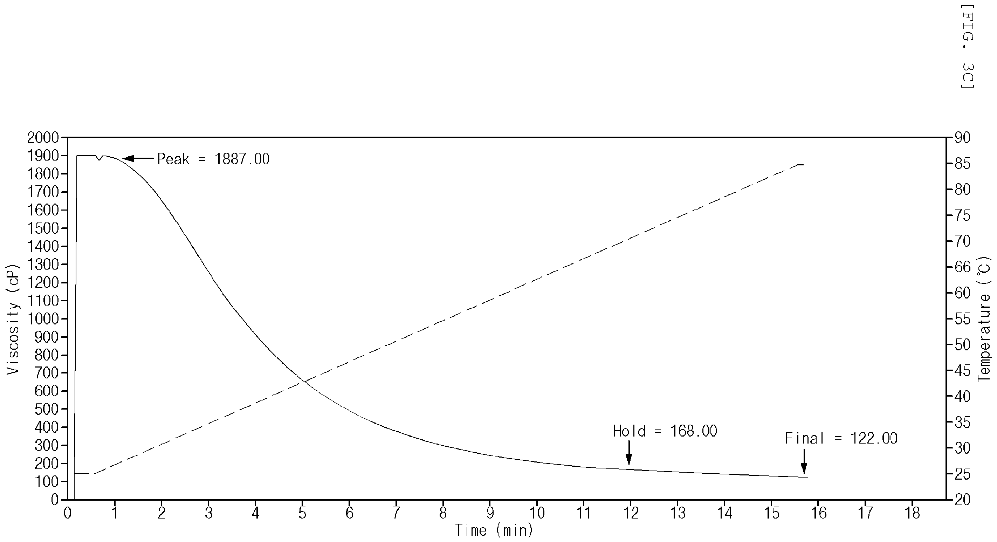

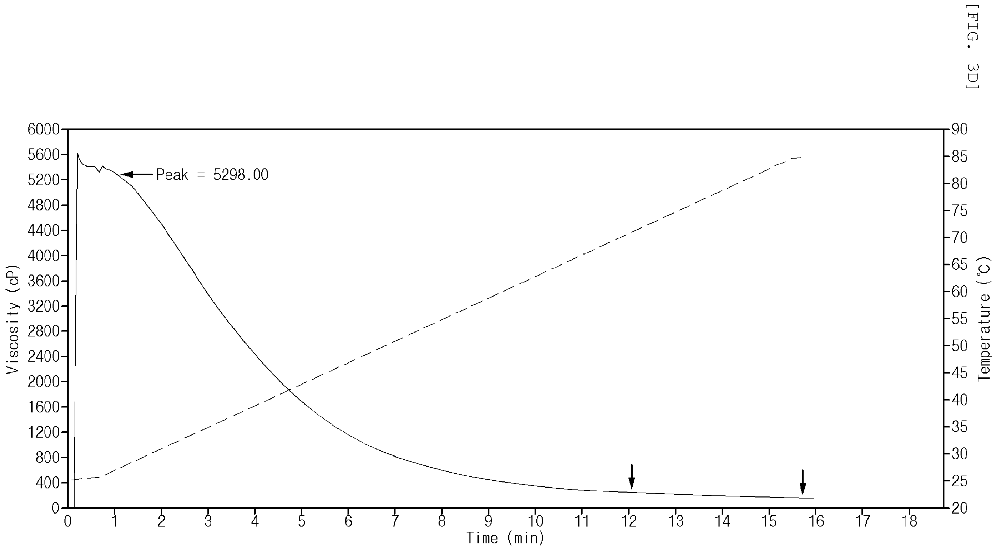

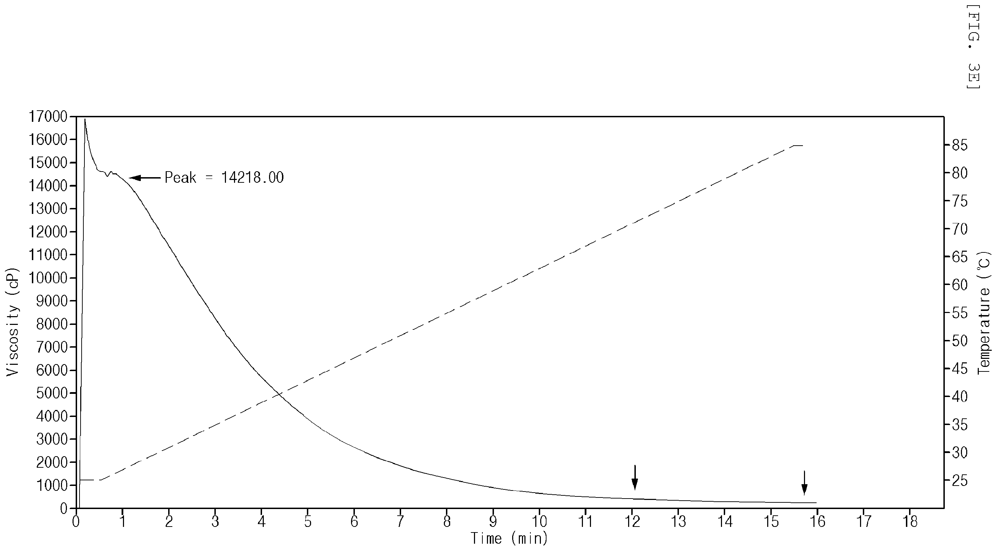

The viscosity of the sauce manufactured in Example 1 of Experimental Example 2 was measured in the same manner as in Example 2 of Experimental Example 1 by adjusting to 250 rpm (FIGS. 3A to 3E). Table 5 shows the results of measuring viscosity.

[Table 5]

| Temperat ure (°C) | Viscosity (cP) | | | | |
|---|---|---|---|---|---|
| | Experimental Example 2-1 | Experimental Example 2-2 | Experimental Example 2-3 | Experimental Example 2-4 | Experimental Example 2-5 |
| 25 | 440 | 819 | 1907 | 5626 | 12742 |
| 30 | 402 | 764 | 1723 | 4701 | 12086 |
| 40 | 237 | 394 | 817 | 2140 | 4976 |
| 50 | 165 | 230 | 396 | 862 | 1927 |
| 60 | 128 | 166 | 238 | 411 | 776 |
| 70 | 104 | 130 | 171 | 250 | 397 |
| 80 | 87 | 106 | 136 | 181 | 252 |

**Example 3. Measurement of absorption rate of sauce composition**

In order to compare the absorption rates of the sauce compositions manufactured in Example 1 of Experimental Example 2, 2.5 g of the sauce composition was applied and the sauce absorption rate was observed with the naked eye. In order to clearly observe the absorption rate of the sauce composition by the naked eye, a sponge [Frog Magic Block (trade name) made of melamine, available from BASF, Germany] was used instead of the fried food. Specifically, 2.5 g of the sauce composition was applied (application rate: about 1,000%) on the entire surface of the sponge having an area of 1.5 cm×4.5 cm = 6.75 cm$^2$, and then absorption was observed over time.

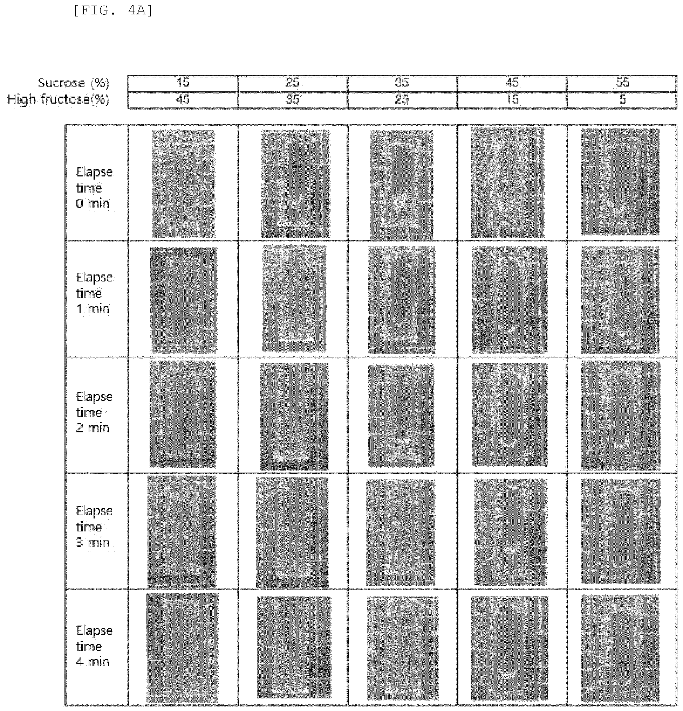

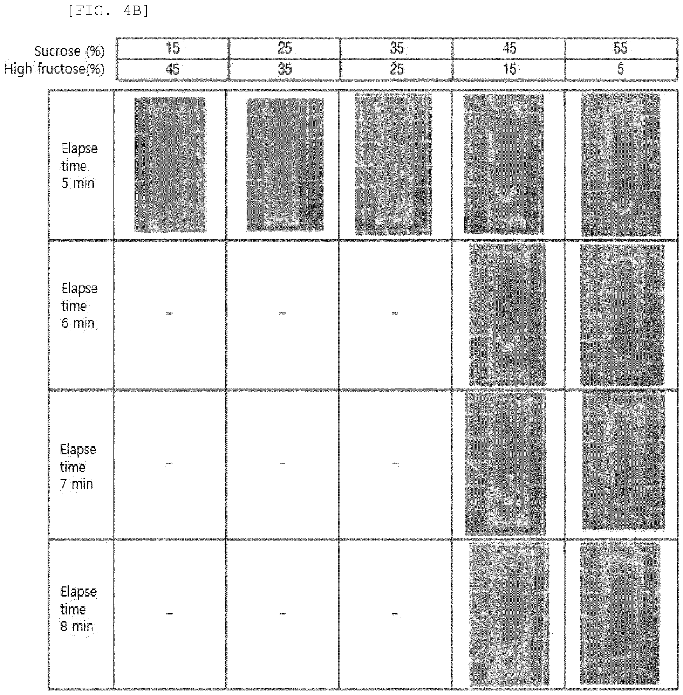

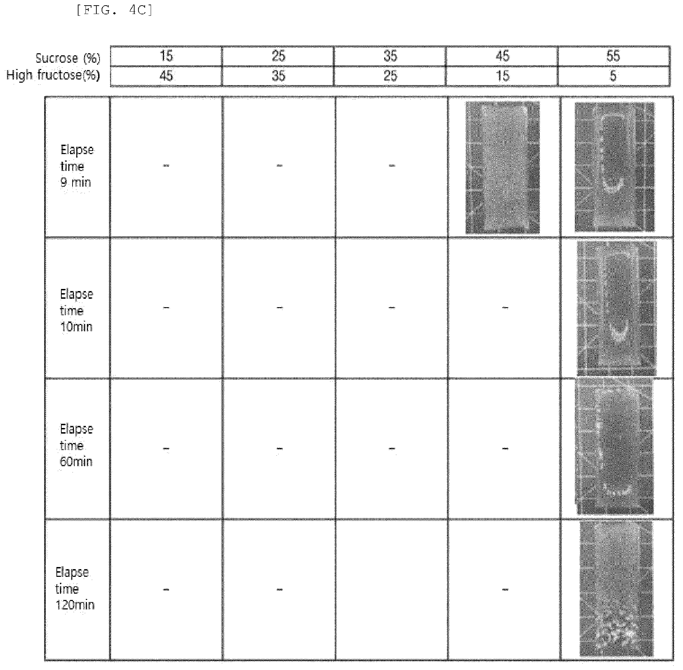

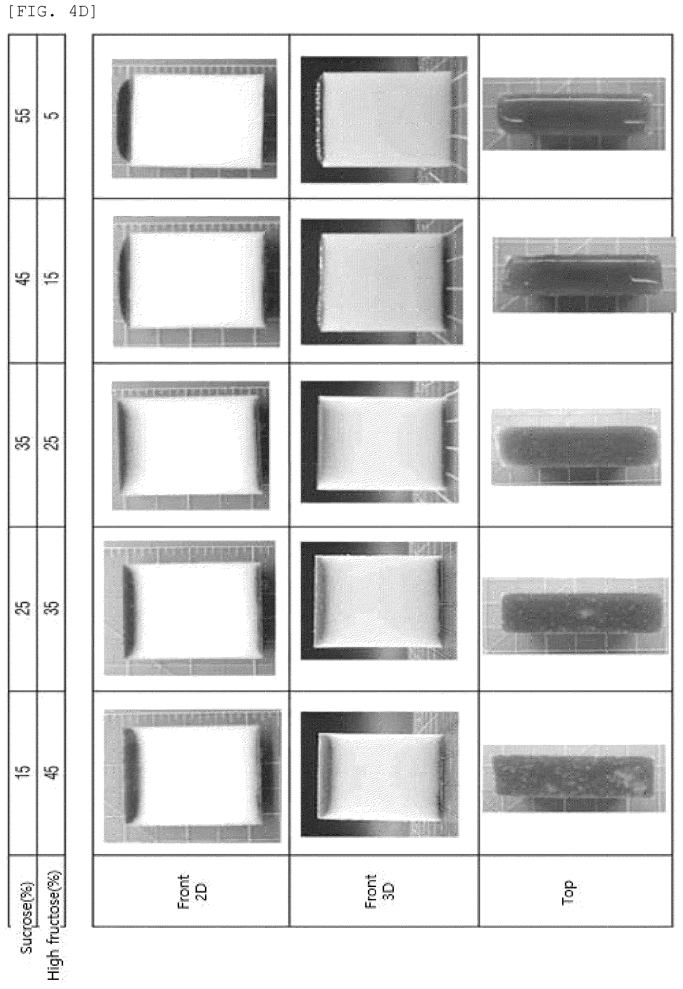

As a result of measurement, Experimental Example 2-1 (sugar: 15%) was absorbed immediately after sauce application, but it took about 1 minutes for Experimental Example 2-2 (sucrose: 25%), about 2 minutes for Experimental Example 2-3 (sucrose: 35%), about 9 minutes for Experimental Example 2-4 (sucrose: 45%), and about 120 minutes for Experimental Example 2-5 (sucrose: 55%) to be completely absorbed (FIGS. 4A to 4D). From the above results, it was confirmed that as the content of sucrose was increased, the absorption rate of the sauce during coating was decreased, which contributed to maintaining crispness of batter without being soggy.

**Example 4. Comparison of crispy textures of chicken coated with sauce composition**

The crispy textures of the frozen chicken manufactured by applying the sauce compositions manufactured in Example 1 of Experimental Example 2 were evaluated. The evaluation method was as described in Example 4 of Experimental Example 1. Table 6 shows the results of measuring average gradient.

[Table 6]

| Experimental group | Average Gradient (g/sec) |
|---|---|
| Experimental Example 2-1 | 208.0 |
| Experimental Example 2-2 | 554.1 |
| Experimental Example 2-3 | 633.6 |
| Experimental Example 2-4 | 832.7 |
| Experimental Example 2-5 | 710.9 |

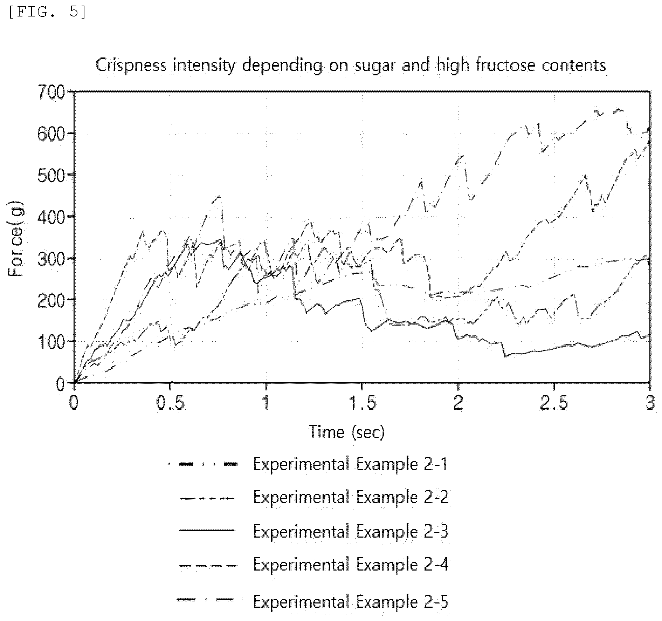

As a result of confirming crispness intensity by considering average gradient, force, and the number of peaks, Experimental Example 2-4 (sucrose: 45%) and Experimental Example 2-5 (sucrose: 55%) showed the highest crispness intensity, Experimental Example 2-2 (sucrose: 25%) and Experimental Example 2-3 (sucrose: 35%) showed the next high crispness intensity, and Experimental Example 2-1 (sucrose: 15%) had a relatively low crispness intensity (FIG. 5). It was confirmed that as the content of sucrose in the sauce composition was increased, the crispy texture was better realized, by the above experimental results.

**[Experimental Example 3] Experiment of change in application rate when coating sauce composition**

**Example 1. Manufacture of chicken**

The sauce composition of Experimental Example 1-2 was applied on chicken nuggets (CJ Cheiljedang Corp.) according to each application rate (3% to 25%) with a brush (Table 7). Specifically, the same amount of batter solution (3.5 g) was applied on one surface of the chicken nuggets, the chicken nuggets were fried for 2 minutes and 30 seconds, and the sauce composition was applied on the fried chicken according to each application rate (3% to 25%). Thereafter, the chicken was quickly frozen for 1 hour and stored in a freezer for 5 days, and then the frozen chicken was cooked with an air fryer (Phillips HD9860/95) at 140° C to manufacture chicken. The application rate was calculated by "application rate = (weight of chicken after sauce application - weight of chicken before sauce application) / (weight of chicken before sauce application) × 100 (%)".

[Table 7]

| Configur ation | Experimen tal Example 3-1 | Experimen tal Example 3-2 | Experimen tal Example 3-3 | Experimen tal Example 3-4 | Experimen tal Example 3-5 | Experimen tal Example 3-6 |
|---|---|---|---|---|---|---|
| Applicat ion rate (%) | 3 | 7 | 10 | 13 | 16 | 25 |

**Example 2. Measurement of absorption rate of sauce depending on application rate**

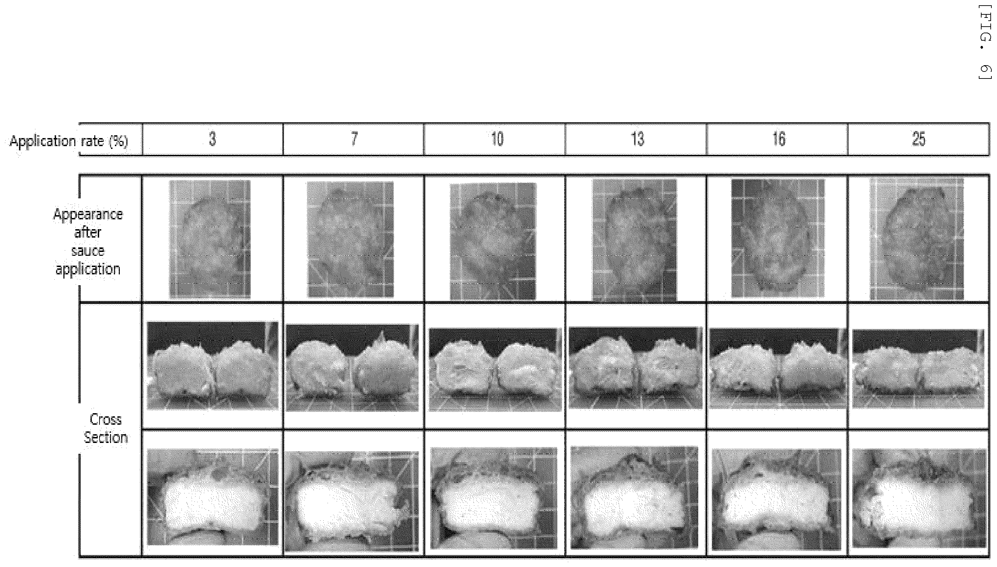

The absorption rate of the sauce depending on the application rate of chicken manufactured in Example 1 of Experimental Example 3 was confirmed by observing appearance and cross section of chicken with the naked eye. When the application rate was 3% to 13% (Experimental Examples 3-1 to 3-4, the sauce was placed on the outermost surface of the batter, and when the application rate was 16% (Experimental Example 3-5), a part of the sauce was absorbed and transferred inside the batter. When the application rate was 25% (Experimental Example 3-6), most of the sauce was transferred into the batter (FIG. 6).

**[Experimental Example 4] Experiment of change in coating method when coating sauce composition**

**Example 1. Manufacture of chicken**

Fried meat was prepared by common curing, aging, powdering, and frying processes of chicken meat.

Specifically, frozen chicken breast as the chicken meat was completely thawed by RF (5000±1000v, 55±10kW, 25 min ±25 min) and natural thawing, added to a saline solution including 26 g of water, 0.6 g of soy protein isolate, 0.6 g of corn starch, 0.18 g of refined salt, and 0.03 g of pepper powder, and tumbled at a speed of 5 to 7 rpm for 30 minutes to cure the chicken breast. Next, the cured chicken breast was aged in a cold-storage warehouse for 6 to 24 hours. Next, the aged cured chicken breast was cut into 17.5±2.5 g, and powdered and battered with prepared powder (soft flour) and battering solution (GOURMET Crunchwing batter). At this time, the process was performed so that the powder had a weight of ±3% and the battering solution had a weight of ±5%, as compared with the weight of the cured chicken breast. Immediately after the powdering and the battering, battered fried meat (fried chicken) was manufactured by a first heat treatment and then a second heat treatment at an oil bath temperature of 180±5°C within 10 minutes.

Experimental Example 4

The manufactured fried meat (fried chicken) was added to a tumbler, and the sauce composition having the composition of Experimental Example 1-2 was spray injected with tumbling to coat the sauce composition until the application rate of the fried meat (fried chicken) was 10%. When the sauce composition was coated, the sauce composition was sprayed at a high pressure (0.3 - 2.0 bar, based on pipeline pressure between a sauce supply tank and a spray nozzle) in a heated state to the temperature of 60°C or higher to perform coating. In addition, the tumbler was disposed to have an inclination angle of about 5° and adjusted to have a temperature inside of 30 to 50°C, the rotation speed of the tumbler was set to 3 to 10 rpm, and a time for the fried meat to be added into the tumbler and then pass through and be discharged from the tumbler was set to within 1 minute, thereby performing sauce coating. The manufactured fried meat coated with the sauce composition was quickly frozen (at -40°C for 50 minutes) to manufacture frozen chicken.

Comparative Example 4-1

For comparison, the manufactured fried meat was coated with the sauce composition in a manner of dipping in the same sauce composition as Experimental Example 4. Application was performed to have an application rate of 10% for having the same application rate as Experimental Example 4, and the fried meat coated with the sauce composition was quickly frozen (at -40°C for 50 minutes) to manufacture frozen chicken.

Comparative Example 4-2

For comparison, the manufactured fried meat was coated with the sauce composition in a manner of dipping in the same sauce composition as Experimental Example 4. The entire surface of the manufactured fried meat was coated with the sauce composition as thin as possible, and at this time, the application rate was about 30%. Subsequently, the fried meat coated with the sauce composition was quickly frozen (at -40°C 50 minutes) to manufacture frozen chicken.

**Example 2. Comparison of appearance and crispness of chicken depending on coating method**

As a result of comparing appearances of Experimental Example 4 and Comparative Example 4-1 in which coating was performed at the same application rate (10%), though the application was performed at the same application rate in the dipping method of Comparative Example 4-1, the sauce composition was applied on only a part of the fried meat during application, and thus, the sauce coating uniformity of the fried meat was confirmed to be significantly low. However, in the case of a process of coating by applying a tumbling while performing sauce application by spraying, it was confirmed that the sauce composition was uniformly applied on the entire fried meat when the sauce composition was applied at an application of 10% (FIG. 7).

The frozen chicken of Experimental Example 4 and Comparative Example 4-2 was cooked using a microwave oven or an air fryer to perform sensory evaluation.

Specifically, microwave cooking was performed for 2 minutes and 15 seconds in a microwave oven (1,000 W, Samsung), and air fryer cooking was performed at 140°C for 11 minutes in an air fryer (HD9860/95, Phillips).

The sensory evaluation was performed blindly among trained researchers, and the cooked products were eaten simultaneously, and the sensory evaluation of microwave cooking and the sensory evaluation of air fryer cooking were performed by different researchers from each other. The first half score (average) of crispness intensity and preference were shown based on a 5-point scale. As the crispness intensity and the preference were close to 5 points, the crispness intensity was high and the crispness preference was high. Product preference was measured by the proportion of the selected sample among the total respondents.

As a result, regardless of the cooking method, it was confirmed that the scores of Experimental Example 4 were higher to a statistically significant level than those of Comparative Example 4-2, in the crispness intensity, the preference, and the product preference. In addition, among the cooking methods, it was confirmed that the crispness intensity and preference, and product preference were shown to be higher in the air fryer cooking (Tables 8 and 9).

[Table 8]

|  | Experimental Example 4 | Comparative Example 4-2 | p-value |
|---|---|---|---|
| Crispness intensity of batter | 3.62 | 2.62 | <0.01 |
| Crispness preference of batter | 3.78 | 2.6 | <0.01 |
| Product preference (%) | 84 | 16 | <0.01 |

Microwave cooking (n=50)

[Table 9]

|  | Experimental Example 4 | Comparative Example 4-2 | p-value |
|---|---|---|---|
| Crispness intensity of batter | 4.4 | 2.9 | <0.01 |
| Crispness preference of batter | 4.6 | 2.9 | <0.01 |
| Product preference (%) | 93.5 | 6.5 | <0.01 |

Air fryer cooking (n=62)

Hereinabove, representative examples of the present disclosure had been illustratively described, but the scope of the present disclosure is not limited to the certain examples described above, and appropriate modification may be carried out within the scope of the claims of the present disclosure by a person with ordinary skill in the art.

**Claims**

1. A sauce composition for coating fried food comprising sucrose, wherein the sauce composition has a sugar content of 60 to 90 brix, and a viscosity at 80°C of 50 to 1,000 cP.

2. The sauce composition for coating fried food of claim 1, wherein a proportion of the sucrose is 10 to 95 wt% with respect to 100 wt% of the sauce composition.

3. The sauce composition for coating fried food of claim 2, wherein when a sponge having an area of 6.75 cm$^2$ is coated with 2.5 g of the sauce composition, it takes 1 minute or more to completely absorb the sauce composition into the sponge.

4. The sauce composition for coating fried food of claim 1, wherein the sauce composition includes sucrose and starch sugar, and a weight ratio of the sucrose to the starch sugar is 20:45 to 62:3.

5. The sauce composition for coating fried food of claim 4, wherein the starch sugar is one or more selected from the group consisting of high fructose, maltose, and starch syrup.

6. The sauce composition for coating fried food of claim 4, wherein the coating is performed by spray coating.

7. Frozen fried food coated with the sauce composition of claim 1, wherein an application rate of the sauce composition by the following Equation 1 is 2 to 30%:

[Equation 1]

$$\text{Application rate } (\%) = (W1 - W0)/(W0) \times 100$$

wherein

W1 is a weight (kg) of fried food after coating the sauce composition, and
W0 is a weight (kg) of fried food before coating the sauce composition.

8. A method of manufacturing fried food, the method comprising:

   applying batter on a surface of a food raw material;
   frying the food raw material covered with the batter to obtain fried food; and
   coating a surface of the fried food with the sauce composition of claim 1 by heating the sauce composition to a temperature of 40 to 90°C and then spraying the heated sauce composition on the fried food.

9. The method of manufacturing fried food of claim 8, wherein the coating of a surface of the fried food with the sauce composition is performed by tumbling the fried food in a tumbler.

10. The method of manufacturing fried food of claim 8, wherein an injection pressure of spraying the sauce composition for food is 0.2 to 3.5 bar.

11. The method of manufacturing fried food of claim 8, wherein the applying of batter on a surface of a food raw material includes:

    curing the food raw material;
    aging the cured food raw material; and
    powdering and battering the aged food raw material.

12. The method of manufacturing fried food of claim 8, further comprising: freezing the fried food coated with the sauce composition.

13. The method of manufacturing fried food of claim 8, wherein the food raw material is selected from the group consisting of chicken, pork, beef, fish meat, and vegetable protein raw materials.

14. The method of manufacturing fried food of claim 8, wherein an application rate of the sauce composition by the following Equation 1 is 2 to 30%:

    [Equation 1]

    $$\text{Application rate } (\%) = (W1 - W0)/(W0) \times 100$$

wherein

W1 is a weight (kg) of fried food after coating the sauce composition, and
W0 is a weight (kg) of fried food before coating the sauce composition.

[FIG. 1A]

EP 4 497 331 A1

[FIG. 1B]

Temperature (°C)

Peak = 121.00

Hold = 61.00

Final = 55.00

Time (min)

Viscosity (cP)

[FIG. 1C]

[FIG. 1D]

EP 4 497 331 A1

[FIG. 1E]

Peak = 3683.00

Hold = 395.00

Time (min)

Temperature (°C)

Viscosity (cP)

Crispness intensity depending on brix (%)

- ·· — Comparative Example 1-1

- - - - Experimental Example 1-1

———— Experimental Example 1-2

- - - - Experimental Example 1-3

- · — Experimental Example 1-4

[FIG. 2]

EP 4 497 331 A1

[FIG. 3A]

[FIG. 3B]

[FIG. 3C]

[FIG. 3D]

EP 4 497 331 A1

[FIG. 3E]

EP 4 497 331 A1

[FIG. 4A]

| Sucrose (%) | 15 | 25 | 35 | 45 | 55 |
| High fructose(%) | 45 | 35 | 25 | 15 | 5 |

[FIG. 4B]

| Sucrose (%) | 15 | 25 | 35 | 45 | 55 |
|---|---|---|---|---|---|
| High fructose(%) | 45 | 35 | 25 | 15 | 5 |

[FIG. 4C]

| Sucrose (%) | 15 | 25 | 35 | 45 | 55 |
|---|---|---|---|---|---|
| High fructose(%) | 45 | 35 | 25 | 15 | 5 |

| | 15 / 45 | 25 / 35 | 35 / 25 | 45 / 15 | 55 / 5 |
|---|---|---|---|---|---|
| Elapse time 9 min | - | - | - | | |
| Elapse time 10min | - | - | - | - | |
| Elapse time 60min | - | - | - | - | |
| Elapse time 120min | - | - | | - | |

[FIG. 4D]

EP 4 497 331 A1

| Sucrose(%) | 15 | 25 | 35 | 45 | 55 |
| --- | --- | --- | --- | --- | --- |
| High fructose(%) | 45 | 35 | 25 | 15 | 5 |

[FIG. 5]

Crispness intensity depending on sugar and high fructose contents

· — ·· — Experimental Example 2-1

— — — Experimental Example 2-2

———— Experimental Example 2-3

— — — — Experimental Example 2-4

— · — Experimental Example 2-5

[FIG. 6]

| Application rate (%) | 3 | 7 | 10 | 13 | 16 | 25 |
|---|---|---|---|---|---|---|
| Appearance after sauce application | | | | | | |
| Cross Section | | | | | | |

[FIG. 7]

Comparative Example 4-1    Experimental Example 4

[FIG. 8]

Adding cooked product    20    10

<div style="text-align:center">

**INTERNATIONAL SEARCH REPORT**

</div>

| | International application No. |
|---|---|
| | **PCT/KR2024/004195** |

**A. CLASSIFICATION OF SUBJECT MATTER**

**A23L 23/00**(2016.01)i; **A23L 27/30**(2016.01)i; **A23L 13/70**(2016.01)i; **A23L 13/77**(2023.01)i; **A23L 13/75**(2023.01)i; **A23P 20/18**(2016.01)i; **A23P 30/00**(2016.01)i

According to International Patent Classification (IPC) or to both national classification and IPC

**B. FIELDS SEARCHED**

Minimum documentation searched (classification system followed by classification symbols)

A23L 23/00(2016.01); A23G 3/00(2006.01); A23L 1/09(2006.01); A23L 1/22(2006.01); A23L 1/39(2006.01); A23L 1/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자당(sucrose), 당도(sugar content, brix degree), 점도(viscosity), 소스 (sauce), 튀김식품(fried food), 코팅(coating), 전분당(starch sugar), 분사(spray), 텀블링(tumbling)

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0010278 A (INSUNG BIO CO., LTD.) 25 January 2022 (2022-01-25)<br>See paragraphs [0017]-[0018] and [0046]. | 1-14 |
| A | JP 2010-213623 A (Q P CORP. et al.) 30 September 2010 (2010-09-30)<br>See paragraphs [0021] and [0041]. | 1-14 |
| A | JP 06-217731 A (NIPPON SHOKUHIN KAKO CO., LTD.) 09 August 1994 (1994-08-09)<br>See claims 1 and 3; and paragraphs [0020]-[0021]. | 1-14 |
| A | JP 2004-313071 A (OBARA, Kazuyo) 11 November 2004 (2004-11-11)<br>See claims 4 and 5. | 1-14 |
| A | KR 10-2018-0079038 A (PULMUONE CO., LTD.) 10 July 2018 (2018-07-10)<br>See claim 1; and paragraphs [0034]-[0035], [0065] and [0096]. | 1-14 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 July 2024** | **03 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/004195**

| Patent document cited in search report | | | Publication date (day/month/year) | Patent family member(s) | | | Publication date (day/month/year) |
|---|---|---|---|---|---|---|---|
| KR | 10-2022-0010278 | A | 25 January 2022 | None | | | |
| JP | 2010-213623 | A | 30 September 2010 | JP | 5006359 | B2 | 22 August 2012 |
| JP | 06-217731 | A | 09 August 1994 | JP | 3347793 | B2 | 20 November 2002 |
| JP | 2004-313071 | A | 11 November 2004 | None | | | |
| KR | 10-2018-0079038 | A | 10 July 2018 | KR | 10-2351047 | B1 | 14 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230043423
- KR 1020240043500

- KR 1020220100168